# EUROPEAN PATENT SPECIFICATION

(11) **EP 3 847 624 B1**
(45) Date of publication and mention of the grant of the patent: **01.05.2024**
(21) Application number: 19779594.1
(22) Date of filing: 04.09.2019
(51) Int. Cl.: G06T 11/00, G06T 11/60, G06T 7/73, H04N 1/00

(54) **A METHOD FOR PRINTING IMAGES ON FLAT ARTICLES OF VARIOUS DIMENSIONS**
VERFAHREN ZUM DRUCKEN VON BILDERN AUF FLACHEN GEGENSTÄNDEN VERSCHIEDENER ABMESSUNGEN
PROCÉDÉ D'IMPRESSION D'IMAGES SUR DES ARTICLES PLATS DE DIFFÉRENTES DIMENSIONS

(30) Priority: 05.09.2018 IT 201800008366
(43) Date of publication of application: 14.07.2021
(73) Proprietor: ELITRON IPM S.r.l., 63813 Monte Urano (FM) (IT)
(72) Inventor: GALLUCCI, Giuseppe, 63813 Monte Urano (FM) (IT)
(74) Representative: Dall'Olio, Christian
(86) International application number: PCT/IB2019/057435
(87) International publication number: WO 2020/049469

(56) References cited:
- WO-A1-2013/168070
- US-A1- 2004 119 725
- US-A1- 2009 262 378
- US-A1- 2011 116 133
- US-A1- 2017 000 235
- US-B1- 9 917 977

## Description

### FIELD OF THE INVENTION

The present invention relates to the technical sector concerning a method for printing images on flat articles of various dimensions, the articles being made of any printable material.

### DESCRIPTION OF THE PRIOR ART

WO 2013/168070 A1 describes a method for realising a component comprising a plurality of images, made available in a first file, the component having a flat extension and being made of a printable material, positioned on a work plane of a printing machine, managed and controlled by an electronic processor, there being arranged, above the plane, optical means for detecting the positioning of the component and the dimensions thereof; the method comprising:
processing, using the processor, a virtual representation of the component;
circumscribing the profiles of the images of the first file with a same number of closed lines to define corresponding sets, constituted by images and relative closed lines, memorised in a second file;
carrying out, on the virtual representation of the component, a grouping of a plurality of the sets which are translated and rotated so as to minimise the surface of the component not circumscribed by the closed lines so as to define an intermediate file;
memorising the pagination of the intermediate file in a print file;
using the printing machine to print the images of the plurality of sets on the component.

In this way a component is obtained on which the sets are printed.

The solution provided by WO 2013/168070 A1 does not enable defining an "overall image", owing to the fact that the sets are not orientated in an ordered way on the component; in fact these sets are arranged so as to minimise the surface of the component not circumscribed by the closed lines relative to the images of the sets.

In order to obtain articles with a predetermined image, it is necessary to cut the component according to closed-loop paths, for example at or in proximity of the closed line which circumscribes each image: this undoubtedly constitutes a drawback.

### SUMMARY OF THE INVENTION

The invention has the aim of providing a method for printing images on flat articles of various dimensions randomly positioned on a work plane of a printing machine, which obviates the drawback of the prior art.

A further aim of the invention is to provide a method that enables a virtual pre-centring of the images on corresponding articles.

A further aim of the invention is to provide a method which enables minimising the time required for printing a plurality of articles of different sizes positioned on a work plane of the printing machine.

A still further aim of the invention is to provide a method for printing images on flat articles of various dimensions which enables "loading", in the RIP (Raster Image Processor) software, a corresponding print file readable by a printing machine.

A further aim of the invention is to provide a method that as well as satisfying the preceding aim enables printing any article as long as it is made of a printable material.

The above-mentioned advantages of the invention are obtained according to the contents of the claims.

### BRIEF DESCRIPTION OF THE DRAWINGS

The characteristics of the invention are specified in the following with particular reference to a preferred, but not exclusive, embodiment, with reference to the accompanying tables of drawings, in which:
- figure 1 schematically illustrates a block diagram of a method for printing images on flat articles of various dimensions, object of the present invention;
- figures 2A, 2B, 2C, schematically illustrate, and by way of example, in order, a series of images, a series of borders of articles and a series of the same articles following the combination between images and corresponding borders of articles;

- figure 3 schematically illustrates the acquiring of the dimensions and the positioning of a series of articles located on the work plane of a machine for printing predefined images on corresponding articles;
- figures 4A, 4B schematically illustrate two operating steps of the method of the invention;
- figure 5A schematically illustrates the above-described printing machine as well as the above-mentioned articles on which predefined images have been printed;
- figure 5B schematically illustrates the above-described printing machine as well as the above-mentioned articles on which predefined images have been printed.

### DESCRIPTION OF THE PREFERRED EMBODIMENTS

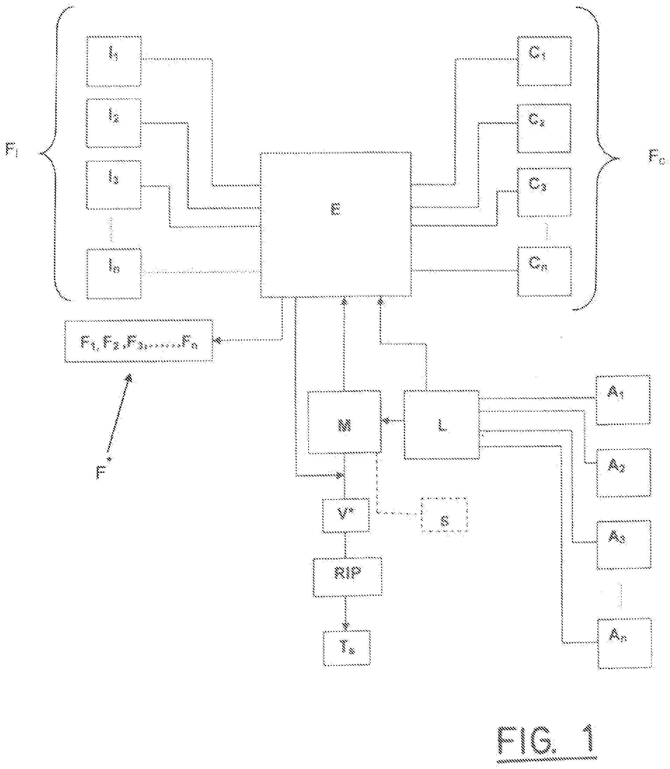

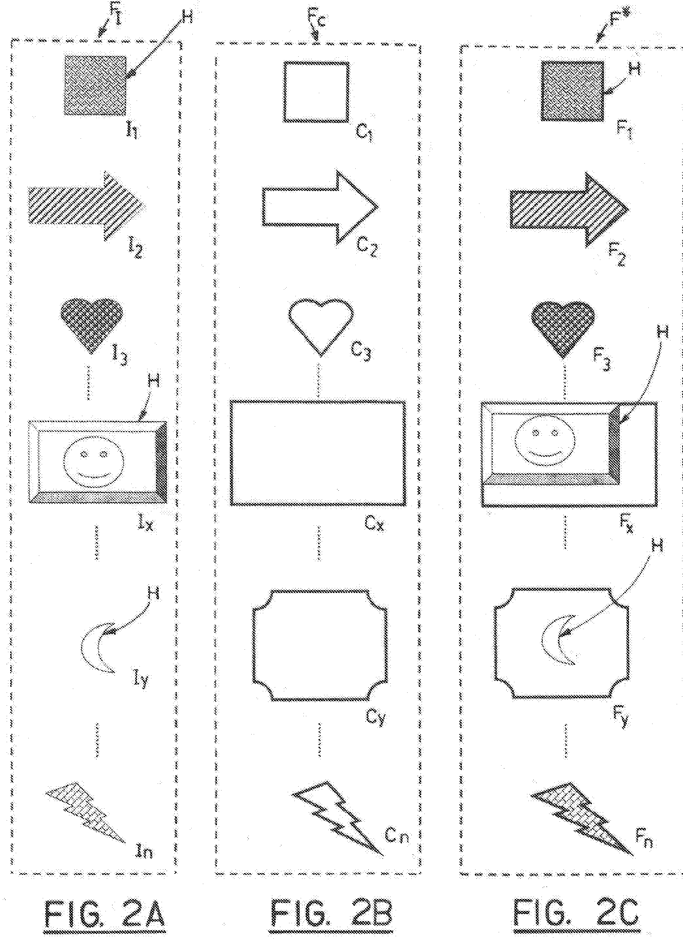

With reference to figures 1, 2A, a series of images which are to be printed they are indicated with (I₁, I₂, I₃,_{,}...Iₙ), each of which must be printed on a corresponding article (A_{1,} A₂, A₃,...A_{n,}); each image (I₁, I₂, I₃,...Iₙ) is made to correspond to a closed line (H) that circumscribes the image, to create an image file (F₁), memorised in a processor (E), containing the images (I_{1,} I₂, I₃,_{,}...Iₙ), to each of which the corresponding closed line (H) circumscribing it is associated. In a first variant, the closed line (H) of each image (I₁, I₂, I₃,...Iₙ) coincides with the border of the corresponding article (A_{1,} A₂, A₃, Aₙ); in a second variant, the closed line (H) of the image (Iₓ) in part coincides with the border (Cₓ) of the corresponding article, while in a third variant, the closed line (H) of the image (I_{y}) is internal of the border (C_{y}) of the corresponding article.

Letters (C₁, C₂, C₃,...Cₙ,) denote the borders of the series of corresponding articles (A₁, A₂, A₃,...A_{n,}) to define a border file (F_{c}), memorised in the processor (E): a border (C₁, C_{2,} C₃,...C_{n,}) corresponds to each article (A₁, A₂, A₃,...A_{n,}) which delimits the surface and shape thereof, and, internally of which, a predefined image (I₁, I₂, I₃,_{,}...Iₙ.) can be inscribed according to a biunivocal correspondence.

The image file (F_{I}) and the border file (F_{c}), are transmitted to and memorised in a processor (E) so as to create a biunivocal correspondence, wherein the image (I₁) will be associated to the border (C₁), wherein the image (I₂) will be associated to the border (C₂), and so on, the association being carried out for all of the "n" images and the "n" borders memorised in the processor (E).

Also included is use of an article file (F*) comprising a series of sets (F_{1,} F_{2,}...Fₙ) with each set obtained by correlating, according to a biunivocal correspondence, each image (I_{1,} I₂,_{,}...Iₙ) to the corresponding border (C₁, C_{2,}...Cₙ).

The proposed method relates to obtaining articles having a flat extension of printable material, for example cardboard, based on yarns, fabrics, plastic elements, sheets, rigid components, etc.

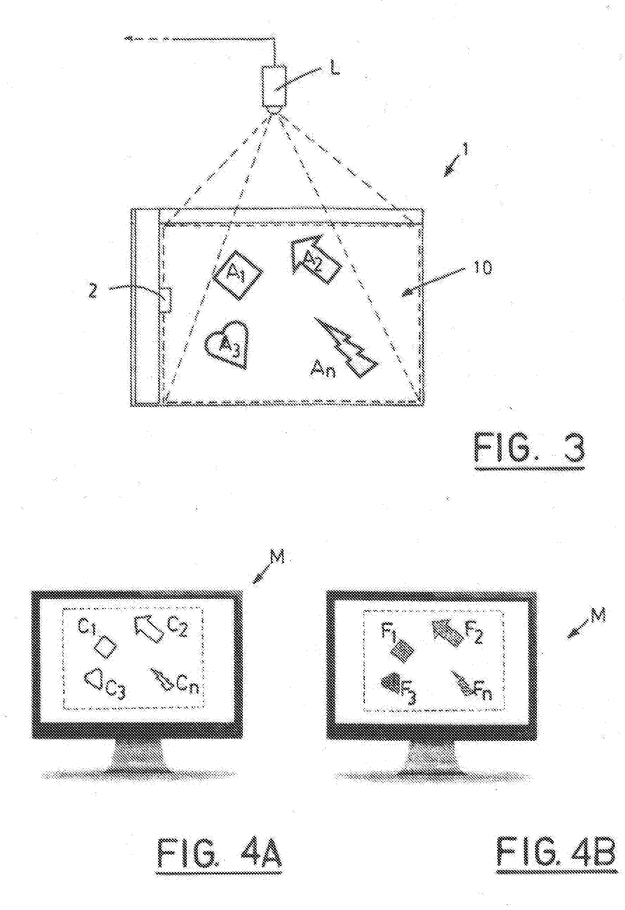

A series of articles (A₁, A₂, A₃,...Aₙ) to be printed (figure 3) are positioned at random on the work plane (10) of a printing machine (1), each of which has a surface and a predefined profile.

An optical reader (L), located above the work plane (10) of the printer (1), detects the profile (dimension and border) of all the articles positioned on the work plane (10), the position and orientation of the articles with respect to the work plane (10); this representation is transmitted to the processor (E), and virtually displayed on the monitor (M) thereof (figure 4A).

Following this display, the processor (E), by means of an appropriate program, carries out the comparison of each article (A_{1,} A₂, A₃,...Aₙ), detected with the borders (C_{1,} C_{2,} C₃,...Cₙ), memorised in the border file (F_{c}) for the recognition of each type of article positioned on the work plane (10); subsequently the relative image (I_{1,} I_{2,} I₃,_{,}...Iₙ) is identified, memorised in the image file (F_{I}) to be associated to each identified article, in order to proceed, according to the image file (F_{I}) and border file (F_{c}), with the orientation and the virtual centring of each image (I_{1,} I_{2,} I₃,_{,}...Iₙ) on and with respect to the virtual orientation of each article detected (A₁, A_{2,} A₃,...Aₙ).

In a case in which the information of the image file (F_{I}) and the article file (F_{c}) are incorporated in the article file (F*), the step of virtual orientating and centring the image of the images (I₁, I₂,...Iₙ) with respect to the relative articles (A_{1,}A_{2,..}Aₙ) is carried out according to the article file (F*).

To define a virtual intermediate file (V*) in which the positioning and the orientation of the articles (A_{1,} A₂, A₃,... Aₙ) on and with respect to the work plane (10) is identified, with the virtual association of the images (I_{1,} I_{2,} I₃,_{,}...Iₙ) to the corresponding borders (C₁, C₂, C₃,...Cₙ) conforming to the detected articles (A_{1,}A_{2,}A₃,...Aₙ) to be printed (figure 4B).

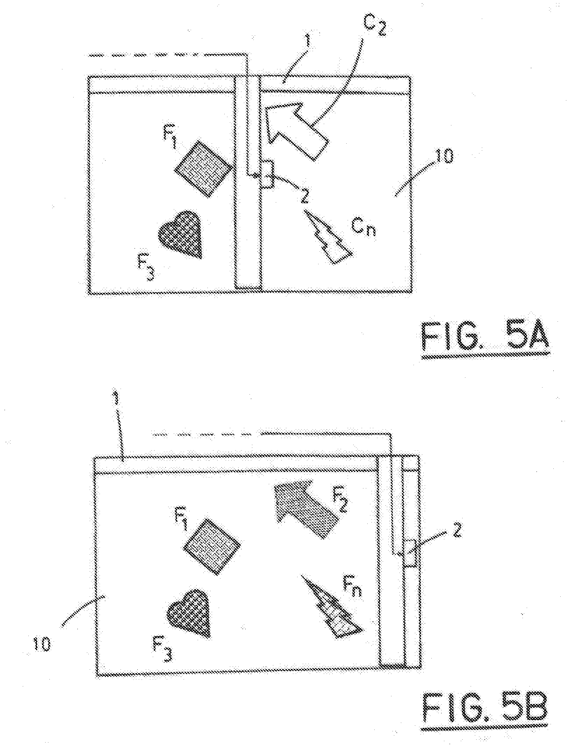

The intermediate file (V*) is loaded in an RIP (Raster Image Processor) software of known type which processes the print layout: the RIP and the driver of the printer (1) (figure 5A).

Alternatively the virtual intermediate file (V*) is created by an operator, who following the display on the monitor (M) of the positioning, orientation and profile of the article, using known devices (mouse (S)), selects the image (I_{1,} I_{2,} I₃,_{,}...Iₙ) corresponding to the displayed article and proceeds with the orientation and virtual centring thereof on the corresponding detected article. Following the creation of the intermediate file (V*), obtained automatically or manually, the printing head (2) of the printer (1), managed by the RIP, is activated to position itself where the articles to be printed are located in order to print the images corresponding to each determined article (A₁, A_{2,} A₃,...Aₙ): see figures 5A, 5B.

The proposed method is particularly advantageous, as it enables printing images on flat articles of various dimensions and conformations, positioned on a work plane of a printing machine in a random order.

The method enables rapid identification of the type/s of article/s positioned on the work plane of the printer; it is in fact sufficient to memorise, in the processor (E), a series of images, a series of borders corresponding to a series of articles to be printed, a biunivocal correspondence between each of the images and a corresponding border and, following the detection of the optical reader (L), to draw from the memorised data to recognise the article/s. The fact of memorising a series of images delimited by a closed line (H) and the fact of memorising a series of borders corresponding to the profile and the dimensions of the article to be printed are advantageous.

Each image, corresponding to the border of the article to be printed, is virtually connected to what is detected by the optical reader (L); each image, in fact, corresponding to the article to be printed, is virtually orientated on the monitor (M) of the processor (E), as a function of the orientation of each article detected on the work plane (10), to identify the article file (F*), then to control the printing head (2), according to the coordinates referring to a Cartesian reference system with an origin coinciding with the origin of the work plane (10) on which the article is laid out, in order then to print on the article/s resting on the work plane (10).

The method of the invention advantageously enables a user to randomly and contemporaneously position, on the work plane of a printer, a series of articles having an identical format, or a different format: thus the print operation of a series of different articles is made more rapid.

The method enables optimising the potentiality of the printing machine, making it very versatile; in fact, as well as contemporaneously printing a plurality of different articles, between one print and another it is possible to vary both the number of articles to be printed, and the type thereof, and when necessary, integrating, according to a biunivocal correspondence, new images, new borders of corresponding new articles to be printed.

The virtual positioning of the images can be carried out automatically by the processor (E), or as previously described by an operator who, following the recognition of the article to be printed, performs the centring and the virtual orientation of the image corresponding to the identified article on the monitor (M).

It is stressed that the aesthetic appearance of each article (A_{1,} A₂,...Aₙ) following the printing thereon of the relative images (I_{1,} I₂,...Iₙ) is the predetermined one; in fact, not only the corresponding image is printed on each article, but also the image is arranged (for example centred) with respect to the border of the article according to predetermined modes.

This arrangement is a function of the dimensions and positioning of the line (H) which circumscribes the relative image (I_{1,} I_{2,}...Iₙ) with respect to the corresponding border (C₁, C_{2,...} Cₙ).

This is highlighted in figures 2A, 2B, 2C, wherein:
- the closed line (H) coincides with the border (images I₁, I₂, I_{3,}...Iₙ, borders C₁, C_{2,,} C₃,_{,}...Cₙ, sets F_{1,} F_{2,} F₃,_{,}...Fₙ); in these cases the image is centred with respect to the border;
- the closed line (H) is contained by the relative border: (image I_{X} rectangular, border (Cₓ) rectangular, set (F_{X}) in which two consecutive sides of (Iₓ) are superposed on two consecutive sides of (C_{X}); in this case the image is staggered with respect to the border; image I_{Y}, of varied profile, border (C_{Y}) of varied profile, set (F_{Y}) in which the image (I_{Y}) is inside the border (C_{Y}); in this case too the image is centred with respect to the border. In the latter case it is possible, where required, to decentre the image (I_{Y}) with respect to the centre of the border (C_{Y}).

Definitively, the closed line (H) that circumscribes the relative image (I₁, I_{2,}...Iₙ) identifies a perimeter that is used to arranged the relative image with respect to the border (C₁, C_{2,...}Cₙ) of the corresponding article (A₁, A_{2,...}Aₙ), for example centred, offset or decentred with respect to the centre of the border.

## Claims

1. A method for printing images on flat articles of various dimensions comprising steps of:
- having available at least an electronic processor (E);
- having available a printing machine (1) activatable by means of the processor (E);
- having available at least an optical reader (L) above the work plane of the printing machine and connected to the processor (E);
- having available at least an article (A_{1,} A₂, A₃, ...Aₙ) having a flat extension and made of a printable material;
- having available and memorising in the processor (E) an image file (F_{I}) comprising at least an image (I₁, I₂, I₃,...Iₙ) to be printed, to which a closed line (H) that circumscribes the image has been made to correspond;
and **characterised in that** it comprises steps of:
- having available and memorising, in the processor (E), at least a border file (F_{c}) comprising at least a border (C₁, C₂, C₃,...Cₙ), corresponding to the border of the at least an article (A₁, A₂, A₃,...Aₙ) to be printed;
- detecting, by means of the optical reader (L), the border, the positioning and the orientation of at least the article (A_{1,} A₂, A₃,...Aₙ) to be printed positioned, in a random arrangement, on the work plane (10) of the printing machine (1);
- virtually displaying, on the monitor (M) of the processor (E), the position, the orientation of the article detected on the work plane;
- virtually associating the border (C_{1,} C₂, C₃,...Cₙ) memorised in the border file (F_{c}) to the article (A₁, A₂, A₃,...Aₙ) detected by the optical reader (L);
- positioning the image (I₁, I₂, I₃,...Iₙ) memorised in the image file (Fᵢ), with respect to the corresponding border (C_{1,} C₂, C₃,...Cₙ) associated to the article (A_{1,} A₂, A₃,...Aₙ) detected by the optical reader (L), to define a virtual intermediate file (V*) in which the positioning and the orientation of the article (A₁, A₂, A₃,...Aₙ) on and with respect to the work plane (10) is memorised, and the association of the image (I₁, I₂, I₃,,...Iₙ) to the corresponding border (C₁, C₂, C₃,...Cₙ) conforming to the article (A_{1,} A₂, A₃,... Aₙ) detected is memorised;
- memorising the virtual intermediate file (V*) in a print file legible by the printing machine (1);
- activating the printing machine (1), piloted by the print file of the preceding step, in order to print the image (I₁, I₂, I₃,...Iₙ) on the article (A₁, A₂, A₃, Aₙ) according to the virtual intermediate file (V*) obtained, to print at least the article positioned on the work plane (10).

2. The method of the preceding claim, **characterised in that** it makes available and memorises, in the processor (E), an article file (F*), in which at least a set (F₁, F₂, F₃... Fₙ) is defined, obtained by correlating, according to a biunivocal correspondence, at least the image (I₁, I₂, I₃,....Iₙ) to the corresponding border (C₁, C₂, C₃,...Cₙ) of the article (A_{1,} A₂, A₃,... Aₙ); and **in that** the step of virtually positioning the image (I₁, I₂, I₃,...Iₙ) is carried out according to the article file (F*).

3. The method of claim 1, **characterised in that** the step of memorising the virtual intermediate file (V*) in a print file legible by the printing machine (1) and the following printing step are realised using a Raster Image Processor program carried out by the electronic processor (E).

4. The method of claim 2, **characterised in that** the step of virtually positioning the image (I₁, I₂, I₃,...Iₙ) with respect to the corresponding border (C_{1,} C₂, C₃,...Cₙ) associated to the article (A₁, A₂, A₃,... Aₙ) detected by the optical reader (L), according to the article file (F*), is carried out by the processor (E).

5. The method of claim 2, **characterised in that** the step of positioning the image (I₁, I₂, I₃,...Iₙ) with respect to the corresponding border (C_{1,} C₂, C₃,...Cₙ) associated to the article (A_{1,} A₂, A₃,...Aₙ) detected by the optical reader (L), according to the article file (F*), is carried out by an operator.

6. The method of claim 1 or 2, **characterised in that** during the step of having available and memorising in the processor (E) an image file (F_{I}) comprising at least an image (I₁, I₂, I₃,...Iₙ) to be printed, the closed line (H) of the at least an image (I₁, I₂, I₃,...Iₙ) coincides with the border (C₁, C₂, Cₙ) of the corresponding article (A₁, A₂, A₃, Aₙ).

7. The method of claim 1 or 2, **characterised in that** during the step of having available and memorising in the processor (E) an image file (F_{I}) comprising at least an image (Iₓ) to be printed, the closed line (H) of the at least an image (Iₓ) in part coincides with the border (Cₓ) of the corresponding article.

8. The method of claim 1 or 2, **characterised in that** during the step of having available and memorising in the processor (E) an image file (F_{I}) comprising at least an image (I_{y}) to be printed, the closed line (H) of the at least an image (I_{y}) is internal of the border (C_{y}) of the corresponding article.

## Patentansprüche

1. Verfahren zum Drucken von Bildern auf flache Gegenstände verschiedener Abmessungen, das die folgenden Schritte umfasst:
- Bereitstellen von mindestens einem elektronischen Prozessor (E);
- Bereitstellen einer Druckmaschine (1), die mit Hilfe des Prozessors (E) aktiviert werden kann;
- Bereitstellen von mindestens einem optischen Lesegerät (L), das sich über der Arbeitsebene der Druckmaschine befindet und mit dem Prozessor (E) verbunden ist;
- mindestens einen Artikel (A_{1,} A₂, A₃, ...Aₙ) mit einer flachen Ausdehnung und aus einem bedruckbaren Material zur Verfügung hat;
- Bereithalten und Speichern einer Bilddatei (F_{I}) im Prozessor (E), die mindestens ein zu druckendes Bild (I₁, I₂, I₃, ... Iₙ) enthält, dem eine geschlossene Linie (H) entspricht, die das Bild umschreibt;
und **dadurch gekennzeichnet, dass** es die folgenden Schritte umfasst:
- Verfügbarkeit und Speicherung im Prozessor (E) von mindestens einer Randdatei (F_{c}), die mindestens einen Rand (C₁, C₂, C₃, ... Cₙ) umfasst, der dem Rand mindestens eines zu bedruckenden Artikels (A₁, A₂, A₃, ...Aₙ) entspricht;
- Erfassen des Randes, der Positionierung und der Ausrichtung mindestens des zu bedruckenden Artikels (A₁, A₂, A₃, ...Aₙ), der in zufälliger Anordnung auf der Arbeitsebene (10) der Druckmaschine (1) positioniert ist, mit Hilfe des optischen Lesers (L);
- virtuelles Anzeigen, auf dem Monitor (M) des Prozessors (E), der Position, der Ausrichtung des auf der Arbeitsebene erfassten Artikels;
- virtuelles Zuordnen des in der Randdatei (F_{c}) gespeicherten Randes (C₁, C₂, C₃, ... Cₙ) zu dem von dem optischen Lesegerät (L) erfassten Gegenstand (A₁, A₂, A₃, ...Aₙ);
- Positionieren des in der Bilddatei (Fᵢ) gespeicherten Bildes (I₁, I₂, I₃, ... Iₙ) in Bezug auf den entsprechenden Rand (C₁, C₂, C₃, ... Cₙ), der dem vom optischen Lesegerät (L) erfassten Artikel (A₁, A₂, A₃, ...Aₙ) zugeordnet ist, um eine virtuelle Zwischendatei (V*) zu definieren, in der die Positionierung und die Ausrichtung des Artikels (A₁, A₂, A₃, ...Aₙ) auf und in Bezug auf die Arbeitsebene (10) und die Zuordnung des Bildes (I₁, I₂, I₃, ... Iₙ) zum entsprechenden Rand (C₁, C₂, C₃, ... Cₙ), der dem erfassten Artikel (A₁, A₂, A₃, ...Aₙ) entspricht, gespeichert werden;
- Speichern der virtuellen Zwischendatei (V*) in einer von der Druckmaschine (1) lesbaren Druckdatei;
- Aktivieren der Druckmaschine (1), die durch die Druckdatei des vorhergehenden Schritts gesteuert wird, um das Bild (I₁, I₂, I₃, ... Iₙ) auf den Artikel (A₁, A₂, A₃, ...Aₙ) gemäß der erhaltenen virtuellen Zwischendatei (V*) zu drucken, um zumindest den auf der Arbeitsebene (10) positionierten Artikel zu bedrucken.

2. Verfahren nach dem vorhergehenden Anspruch, **dadurch gekennzeichnet, dass** es im Prozessor (E) eine Artikeldatei (F*) zur Verfügung stellt und speichert, in der mindestens ein Satz (F_{1,} F_{2,} F₃...Fₙ) definiert ist, der durch Korrelation mindestens des Bildes (I₁, I₂, I₃, ... Iₙ) mit dem entsprechenden Rand (C₁, C₂, C₃, ... Cₙ) des Artikels (A₁, A₂, A₃, ...Aₙ) in Beziehung gesetzt wird; und dass der Schritt der virtuellen Positionierung des Bildes (I₁, I₂, I₃, ... Iₙ) gemäß der Artikeldatei (F*) durchgeführt wird.

3. Verfahren nach Anspruch 1, **dadurch gekennzeichnet, dass** der Schritt des Speicherns der virtuellen Zwischendatei (V*) in einer von der Druckmaschine (1) lesbaren Druckdatei und der folgende Druckschritt unter Verwendung eines von dem elektronischen Prozessor (E) ausgeführten Raster Image Processor Programms realisiert werden.

4. Verfahren nach Anspruch 2, **dadurch gekennzeichnet, dass** der Schritt der virtuellen Positionierung des Bildes (I₁, I₂, I₃, ... Iₙ) in Bezug auf den entsprechenden Rand (C₁, C₂, C₃, ... Cₙ), der dem vom optischen Lesegerät (L) erfassten Artikel (A₁, A₂, A₃, ...Aₙ) zugeordnet ist, gemäß der Artikeldatei (F*) vom Prozessor (E) ausgeführt wird.

5. Verfahren nach Anspruch 2, **dadurch gekennzeichnet, dass** der Schritt des Positionierens des Bildes (11, 12, 13, ... In) in Bezug auf den entsprechenden Rand (C₁, C₂, C₃, ... Cₙ), der dem von dem optischen Lesegerät (L) erfassten Artikel (A₁, A₂, A₃, ...Aₙ) zugeordnet ist, gemäß der Artikeldatei (F*) von einem Bediener ausgeführt wird.

6. Verfahren nach Anspruch 1 oder 2, **dadurch gekennzeichnet, dass** während des Schritts des Bereithaltens und Speicherns einer Bilddatei (F_{I}) im Prozessor (E), die mindestens ein zu druckendes Bild (I₁, I₂, I₃, ... Iₙ) enthält, die geschlossene Linie (H) des mindestens einen Bildes (I₁, I₂, I₃, ... Iₙ) mit dem Rand (C₁, C₂, Cₙ) des entsprechenden Artikels (A₁, A₂, A₃, Aₙ) zusammenfällt.

7. Verfahren nach Anspruch 1 oder 2, **dadurch gekennzeichnet, dass** während des Schritts des Bereithaltens und Speicherns einer Bilddatei (F_{I}) im Prozessor (E), die mindestens ein zu druckendes Bild (Iₓ) enthält, die geschlossene Linie (H) des mindestens einen Bildes (Iₓ) teilweise mit dem Rand (Cₓ) des entsprechenden Artikels zusammenfällt.

8. Verfahren nach Anspruch 1 oder 2, **dadurch gekennzeichnet, dass** die geschlossene Linie (H) des mindestens einen Bildes (I_{y}) während des Schritts des Bereithaltens und Speicherns einer Bilddatei (F_{I}), die mindestens ein zu druckendes Bild (I_{y}) enthält, im Prozessor (E) innerhalb des Randes (C_{y}) des entsprechenden Artikels liegt.

## Revendications

1. Procédé d'impression d'images sur des articles plats de différentes dimensions, comprenant les étapes suivantes :
- disposer d'au moins un processeur électronique (E) ;
- disposer d'une machine d'impression (1) activable au moyen du processeur (E);
- disposer d'au moins un lecteur optique (L) situé au-dessus du plan de travail de la machine à imprimer et connecté au processeur (E) ;
- disposer d'au moins un article (A₁, A₂, A₃, ...Aₙ) ayant une extension plate et constitué d'un matériau imprimable ;
- avoir à disposition et mémoriser dans le processeur (E) un fichier image (F_{I}) comprenant au moins une image (I₁, I₂, I₃,...Iₙ) à imprimer, à laquelle on a fait correspondre une ligne fermée (H) qui circonscrit l'image ;
et **caractérisé en ce qu'**il comprend les étapes suivantes
- disposer et mémoriser, dans le processeur (E), au moins un fichier de bordure (F_{c}) comprenant au moins une bordure (C_{1,} C₂, C₃,...Cₙ), correspondant à la bordure d'au moins un article (A₁, A₂, A₃, ...Aₙ) à imprimer ;
- détecter, au moyen du lecteur optique (L), la bordure, le positionnement et l'orientation d'au moins l'article (A₁, A₂, A₃, ...Aₙ) à imprimer positionné, de manière aléatoire, sur le plan de travail (10) de la machine à imprimer (1) ;
- afficher virtuellement, sur le moniteur (M) du processeur (E), la position, l'orientation de l'article détecté sur le plan de travail ;
- associer virtuellement la bordure (C₁, C₂, C₃,...Cₙ) mémorisée dans le fichier de bordure (F_{C}) à l'article (A₁, A₂, A₃, ...Aₙ) détecté par le lecteur optique (L) ;
- positionner l'image (I₁, I₂, I₃,...Iₙ) mémorisée dans le fichier image (Fᵢ), par rapport à la bordure (C₁, C₂, C₃,...Cₙ) correspondante associée à l'article (A₁, A₂, A₃, ...Aₙ) détecté par le lecteur optique (L), pour définir un fichier intermédiaire virtuel (V*) dans lequel le positionnement et l'orientation de l'article (A₁, A₂, A₃, ...Aₙ) sur et par rapport au plan de travail (10) sont mémorisés, et l'association de l'image (I₁, I₂, I₃,...Iₙ) au bord correspondant (C_{1,} C₂, C₃,...Cₙ) conforme à l'article (A₁, A₂, A₃, ...Aₙ) détecté est mémorisée ;
- mémoriser le fichier intermédiaire virtuel (V*) dans un fichier d'impression lisible par la machine à imprimer (1) ;
- activer la machine à imprimer (1), pilotée par le fichier d'impression de l'étape précédente, afin d'imprimer l'image (I₁, I₂, I₃,...Iₙ) sur l'article (A₁, A₂, A₃, ...Aₙ) selon le fichier intermédiaire virtuel (V*) obtenu, pour imprimer au moins l'article positionné sur le plan de travail (10).

2. Le procédé de la revendication précédente, **caractérisé en ce qu'**il met à disposition et mémorise, dans le processeur (E), un fichier article (F*), dans lequel est défini au moins un ensemble (F₁, F₂, F₃...Fₙ) obtenu en corrélant, selon une correspondance biunivoque, au moins l'image (I₁, I₂, I₃,...Iₙ) à la bordure correspondante (C₁, C₂, C₃,...Cₙ) de l'article (A₁, A₂, A₃, ...Aₙ) ; et **en ce que** l'étape de positionnement virtuel de l'image (I₁, I₂, I₃,...Iₙ) est effectuée selon le fichier d'article (F*).

3. Procédé selon la revendication 1, **caractérisé en ce que** l'étape de mémorisation du fichier intermédiaire virtuel (V*) dans un fichier d'impression lisible par la machine à imprimer (1) et l'étape d'impression suivante sont réalisées à l'aide d'un programme de traitement d'images tramées exécuté par le processeur électronique (E).

4. Le procédé de la revendication 2, **caractérisé en ce que** l'étape de positionnement virtuel de l'image (I₁, I₂, I₃,...Iₙ) par rapport à la bordure correspondante (C_{1,} C₂, C₃,...Cₙ) associée à l'article (A₁, A₂, A₃, ...Aₙ) détecté par le lecteur optique (L), en fonction du fichier article (F*), est réalisée par le processeur (E).

5. Procédé selon la revendication 2, **caractérisé en ce que** l'étape de positionnement de l'image (I₁, I₂, I₃,...Iₙ) par rapport à la bordure correspondante (C₁, C₂, C₃,...Cₙ) associée à l'article (A₁, A₂, A₃, ...Aₙ) détecté par le lecteur optique (L), selon le fichier article (F*), est réalisée par un opérateur.

6. Le procédé de la revendication 1 ou 2, **caractérisé en ce que** lors de l'étape de mise à disposition et de mémorisation dans le processeur (E) d'un fichier image (F_{I}) comprenant au moins une image (I₁, I₂, I₃,...Iₙ) à imprimer, la ligne fermée (H) de la au moins une image (I₁, I₂, I₃,...Iₙ) coïncide avec la bordure (C₁, C₂, Cₙ) de l'article correspondant (A₁, A₂, A₃, Aₙ).

7. Procédé selon la revendication 1 ou 2, **caractérisé en ce que** lors de l'étape de mise à disposition et de mémorisation dans le processeur (E) d'un fichier image (F_{I}) comprenant au moins une image (Iₓ) à imprimer, la ligne fermée (H) de la au moins une image (Iₓ) coïncide en partie avec le bord (Cₓ) de l'article correspondant.

8. Procédé selon la revendication 1 ou 2, **caractérisé en ce que** lors de l'étape de mise à disposition et de mémorisation dans le processeur (E) d'un fichier image (F_{I}) comprenant au moins une image (I_{y}) à imprimer, la ligne fermée (H) de la au moins une image (I_{y}) est interne à la bordure (C_{y}) de l'article correspondant.
